Europäisches Patentamt

European Patent Office

Office européen des brevets

(19)

(11) Numéro de publication : **0 180 499
B1**

(12)

# FASCICULE DE BREVET EUROPÉEN

(45) Date de publication du fascicule du brevet :
27.07.88

(21) Numéro de dépôt : 85401931.2

(22) Date de dépôt : 03.10.85

(51) Int. Cl.⁴ : **H 02 P   9/42**, H 02 P 11/06,
**B 63 J   3/02**

(54) **Alimentation de bord notamment pour un navire propulsé par un moteur diesel à vitesse variable.**

(30) Priorité : 03.10.84 FR 8415167

(43) Date de publication de la demande :
07.05.86 Bulletin 86/19

(45) Mention de la délivrance du brevet :
27.07.88 Bulletin 88/30

(84) Etats contractants désignés :
BE DE GB IT NL

(56) Documents cités :
DE-A- 3 212 430
FR-A- 1 314 086
THE MOTOR SHIP, vol. 46, no. 542, septembre 1965,
page 263, Londres, GB: "Chain transmission used in
allen shaft-driven induction alternator system"

(73) Titulaire : **MOTEURS LEROY-SOMER (Société Anonyme française)**
**Bld. Marcellin-Leroy**
**F-16015 AngoulemeCedex (FR)**

(72) Inventeur : **Roux, Yves Marie Jean P.**
**Echallat**
**F-16170 Rouillac (FR)**
Inventeur : **Pitaud, Patrice Gaston Léon**
**Penanguer**
**F-29110 Concarneau (FR)**

(74) Mandataire : **Nony, Michel et al**
**Cabinet Nony 29, rue Cambacérès**
**F-75008 Paris (FR)**

EP 0 180 499 B1

## Description

L'invention concerne une alimentation de bord, notamment pour un navire propulsé par un moteur Diesel à vitesse variable.

On sait que deux types de procédés étaient jusqu'à présent essentiellement utilisés à bord des navires pour obtenir une énergie électrique régulée en fréquence et en tension.

Dans le premier de ces procédés, le moteur Diesel de propulsion tourne à un régime fixe afin de pouvoir y accoupler un alternateur classique. La variation de vitesse du navire est alors assurée par une hélice à pales variables, ce qui engendre d'une part une usure rapide du moteur, et d'autre part un rendement moyen assez bas.

Dans l'autre procédé, utilisant un Diesel de propulsion à vitesse variable associé à une hélice à pales fixes, l'emploi d'un groupe électrogène tournant en permanence est indispensable.

Afin de remédier aux inconvénients de ces procédés, on a déjà proposé des alimentations de bord comprenant un premier alternateur accouplé au moteur Diesel, un régulateur électronique pour ce premier alternateur, un redresseur pour redresser le courant de sortie du premier alternateur, un moteur à courant continu alimenté par la sortie du redresseur, et un deuxième alternateur accouplé au moteur à courant continu.

Ces dispositifs ne donnent toutefois pas par eux-mêmes entièrement satisfaction, dans la mesure où le redresseur renvoie dans le circuit amont des harmoniques rendant malaisée la régulation du premier alternateur. En outre, cette régulation est influencée dans une certaine mesure par les accélérations et décélérations du moteur Diesel entraînant le premier alternateur. Dans ces conditions, il est difficile de maintenir la sortie du deuxième alternateur dans des gammes de fréquence et de tension admissibles.

La présente invention vise à pallier cet inconvénient.

A cet effet, l'invention a pour objet une alimentation de bord en énergie provenant d'un moteur Diesel notamment pour un navire proopulsé par un moteur Diesel à vitesse variable, comprenant un premier alternateur accouplé au moteur Diesel, un régulateur électronique pour ce premier alternateur, un redresseur pour redresser le courant de sortie du premier alternateur, un moteur à courant continu alimenté par la sortie du redresseur, et un deuxième alternateur accouplé au moteur à courant continu, caractérisé par le fait qu'elle comprend des moyens pour alimenter sélectivement la régulation du premier alternateur à partir de la sortie de ce premier alternateur ou à partir de la sortie du deuxième alternateur.

On comprend ainsi que le régulateur du premier alternateur n'est alimenté à partir de sa propre sortie que pendant la phase de démarrage. C'est donc uniquement dans cette phase qu'il pourra être affecté par les variations de vitesse de rotation du moteur Diesel de propulsion et par les harmoniques renvoyées par le redresseur.

Dès la phase de démarrage terminée, l'alimentation du régulateur du premier alternateur sera basculée sur la sortie du deuxième alternateur qui d'une part est parfaitement sinusoïdal, et d'autre part n'est pas affecté par les variations de vitesse du moteur Diesel de propulsion.

Dans un mode de réalisation particulier, l'alimentation de bord selon l'invention comprend des moyens pour alimenter l'inducteur du moteur à courant continu à partir de la sortie du premier alternateur ou à partir de la sortie du deuxième alternateur et un moyen pour connecter ou déconnecter sélectivement l'alimentation à partir de la sortie du premier alternateur.

Ainsi, non seulement le régulateur du premier alternateur, mais également le moteur à courant continu, ne seront affectés que pendant la phase de démarrage par les imperfections de la sortie du premier alternateur.

Les moyens pour alimenter l'inducteur du moteur à courant continu peuvent comprendre un premier redresseur dont l'entrée est reliée à la sortie du premier alternateur par l'intermédiaire d'un interrupteur, et un deuxième redresseur dont l'entrée est reliée à la sortie du deuxième alternateur, les sorties des deux redresseurs étant connectées en parallèle aux bornes de l'inducteur.

On décrira maintenant à titre d'exemple non limitatif un mode de réalisation de l'invention en référence à son schéma électrique annexé.

L'alimentation de bord représentée sur ce schéma est montée sur un navire propulsé par un moteur Diesel 1 à vitesse variable, ce qui lui permet d'utiliser une hélice à pale fixe.

Un premier alternateur 2 est accouplé par tout moyen convenable 3 au moteur Diesel 1 et est régulé par un régulateur électronique 4.

La sortie de l'alternateur 2 est redressée par un pont redresseur 5 et la sortie du pont 5 est fournie à un moteur à courant continu 6. Un interrupteur 7 est disposé entre la sortie de l'alternateur 2 et l'entrée du redresseur 5.

Un deuxième alternateur 8 est accouplé mécaniquement par tout moyen convenable 9 au moteur à courant continu 6 et est régulé par un régulateur électronique 10.

Le régulateur électronique 10 de l'alternateur 8 est alimenté directement à partir de la sortie 11 de cet alternateur 8 alors que le régulateur 4 de l'alternateur 2 peut être alimenté sélectivement soit à partir de la sortie 12 de l'alternateur 2 soit à partir de la sortie 11 de l'alternateur 8. A cet effet, un commutateur 13 peut relier l'alimentation du régulateur 4 soit à la sortie 11 soit à la sortie 12.

En ce qui concerne le moteur à courant continu 6, son inducteur 14 est relié, d'une part à la sortie 11 de l'alternateur 8 par l'intermédiaire d'un redresseur 15, et d'autre part à la sortie 12 de l'alternateur 2 par l'intermédiaire d'un redresseur 16 et d'un interrupteur 17.

Cette alimentation est démarrée de la façon suivante :

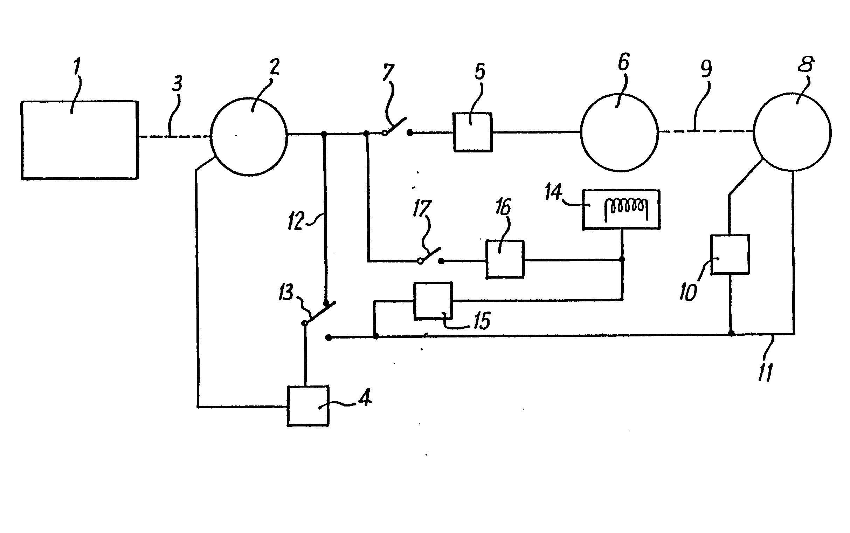

Le moteur Diesel 1 est démarré et sa vitesse est fixée à un niveau permettant l'auto-amorçage de l'alternateur 2. Dès cet auto-amorçage, le régulateur 4 est alimenté à partir de la sortie 12 de l'alternateur 2, le commutateur 13 étant dans la position représentée au dessin. Ce régulateur 4 maintient sensiblement constante la tension de sortie du stator de l'alternateur 2. Les interrupteurs 7 et 17 sont alors fermés de manière à provoquer l'alimentation du moteur à courant continu 6 à partir de la sortie de l'alternateur 2. Durant cette phase, l'alternateur 8, entraîné par le moteur à courant continu 6, s'auto-amorce et délivre sa tension nominale. A partir de cet instant la tension recueillie à la sortie 11 alimente l'inducteur du moteur 6 de sorte que l'alimentation de cet inducteur à partir de l'alternateur 2 peut être isolée en ouvrant l'interrupteur 17.

On provoque alors le basculement du commutateur 13, ce qui a pour effet d'alimenter le régulateur 4 de l'alternateur 2 à partir de la sortie 11 de l'alternateur 8.

Ainsi, la régulation de l'alternateur 2 n'est plus influencée par les variations de vitesse de ce dernier. On s'affranchit également par ce moyen des harmoniques de courant créées dans l'alternateur 2 par la présence du pont redresseur 5, sans utiliser pour autant de filtres d'harmoniques.

**Revendications**

1. Alimentation de bord en énergie provenant d'un moteur Diesel (1), notamment pour un navire propulsé par un moteur Diesel (1) à vitesse variable, comprenant un premier alternateur (2) accouplé au moteur Diesel (1), un régulateur électronique (4) pour ce premier alternateur (2), un redresseur (5) pour redresser le courant de sortie du premier alternateur (2), un moteur à courant continu (6) alimenté par la sortie du redresseur (5), et un deuxième alternateur (8) accouplé au moteur à courant continu (6), caractérisée par le fait qu'elle comprend des moyens (13) pour alimenter sélectivement le régulateur (4) du premier alternateur (2) à partir de la sortie (12) de ce premier alternateur (2) ou à partir de la sortie (11) du deuxième alternateur (8).

2. Alimentation de bord selon la revendication 1, caractérisé par le fait qu'elle comprend des moyens (15, 16) pour alimenter l'inducteur (14) du moteur à courant continu (6) à partir de la sortie du premier alternateur (2) ou à partir de la sortie du deuxième alternateur (8) et un moyen (17) pour connecter ou déconnecter sélectivement l'alimentation de l'inducteur (14) à partir de la sortie du premier alternateur (2).

3. Alimentation de bord selon la revendication 2, caractérisée par le fait que lesdits moyens (15-17) pour alimenter l'inducteur (14) du moteur à courant continu (6) comprennent un premier redresseur (16) dont l'entrée est reliée à la sortie du premier alternateur (2) par l'intermédiaire d'un interrupteur (17), et un deuxième redresseur (15) dont l'entrée est reliée à la sortie du deuxième alternateur (8), les sorties des deux redresseurs (15, 16) étant connectées en parallèle aux bornes de l'inducteur (14).

**Claims**

1. On-board source of power coming from a diesel engine (1), especially for a ship with variable speed diesel engine (1) propulsion, comprising a first alternator (2) coupled to the diesel engine (1), an electronic regulator (4) for this first alternator (2), a rectifier (5) to rectify the output current from the first alternator (2), a d.c. motor (6) supplied by the output of the rectifier (5) and a second alternator (8) coupled to the d.c. motor (6), characterized in that it comprises means (13) of selectively supplying the regulator (4) of the first alternator (2) from the output (12) of this first alternator (2) or from the output (11) of the second alternator (8).

2. On-board power source according to Claim 1, characterized in that it comprises means (15, 16) for supplying the inductor (14) of the d.c. motor (6) from the output of the first alternator (2) or from the output of the second alternator (8) and a means (17) of selectively connecting or disconnecting the supply from the inductor (14) from the output of the first alternator (2).

3. On-board power source according to Claim 2, characterized in that the said means (15-17) for supplying the inductor (14) of the d.c. motor (6) comprise a first rectifier (16), of which the input is connected to the output of the first alternator (2) by way of an interruptor (17), and a second rectifier (15) of which the input is connected to the output of the second alternator (8), the outputs of the two rectifiers (15, 16) being connected in parallel to the terminals of the inductor (14).

**Patentansprüche**

1. Bordspeisequelle für die Energieversorgung durch einen Dieselmotor (1), insbesondere für ein mittels eines drehzahlveränderlichen Dieselmotors (1) angetriebenenes Schiff, bestehend aus einem ersten an den Dieselmotor (1) gekoppelten Wechselstromgenerator (2), einem elektronischen Regler (4) für diesen ersten Wechselstromgenerator (2), einem Gleichrichter (5) zum Gleichrichten des Ausgangsstroms des ersten Wechselstromgenerators (2), einem durch den Ausgang des Gleichrichters (5) gespeisten Gleichstrommotor (6) und einem zweiten, an den Gleichstrommotor (6) gekoppelten Wechselstromgenerator (8), dadurch gekennzeichnet, daß sie Mittel (13) enthält, um den Regler (4) des ersten Wechselstromgenerators (2) wahlweise durch den Ausgang (12) dieses ersten Wechselstromgenerators (2) oder durch den Ausgang (11) des zweiten Wechselstromgenerators (8) zu speisen.

2. Bordspeisequelle nach Patentanspruch 1, dadurch gekennzeichnet, daß sie Mittel (15, 16) enthält, um die Feldwicklung (14) des Gleichstrommotors (6) durch den Ausgang des ersten Wechselstromgenerators (2) oder durch den Ausgang des zweiten Wechselstromgenerators (8) zu speisen, und ein Mittel (17), um die Stromversorgung der Feldwicklung (14) durch den Ausgang des ersten Wechselstromgenerators (2) wahlweise an- oder abzuschalten.

3. Bordspeisequelle nach Patentanspruch 2, dadurch gekennzeichnet, daß die genannten Mittel (15-17) zur Stromversorgung der Feldwicklung (14) des Gleichstrommotors (6) einen ersten Gleichrichter (16), dessen Eingang über einen Schalter (17) mit dem Ausgang des ersten Wechselstromgenerators (2) verbunden ist, und einen zweiten Gleichrichter (15), dessen Eingang mit dem Ausgang des zweiten Wechselstromgenerators (8) verbunden ist, enthalten, wobei die Ausgänge der beiden Gleichrichter (15, 16) parallel an die Feldwicklung angeschlossen sind.

0 180 499